# EUROPEAN PATENT APPLICATION

(11) **EP 2 975 877 A1**
(43) Date of publication of application: **20.01.2016**
(21) Application number: 14764862.0
(22) Date of filing: 04.03.2014
(51) Int. Cl.: H04W 28/06, H04W 16/32

(54) **NETWORK DEVICE AND MOBILE STATION**

(30) Priority: 15.03.2013 JP 2013053423
(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2014/055442
(87) International publication number: WO 2014/141949

(57) **Abstract**

A feedback packet is transmitted to an appropriate radio base station in ROHC control. A radio base station (eNB #1) of the invention includes a transmission unit (12) configured to send a mobile station (UE) instruction information prohibiting "piggybacking (sending of a feedback packet while adding the feedback packet to a data packet)" in the ROHC control.

## Description

### TECHNICAL FIELD

The present invention relates to a network device and a mobile station.

### BACKGROUND ART

A packet with a small amount of data such as a voice packet has a large amount of header data as compared to an amount of payload data, and results in a waste of radio resources if the packet is transmitted or received without any change.

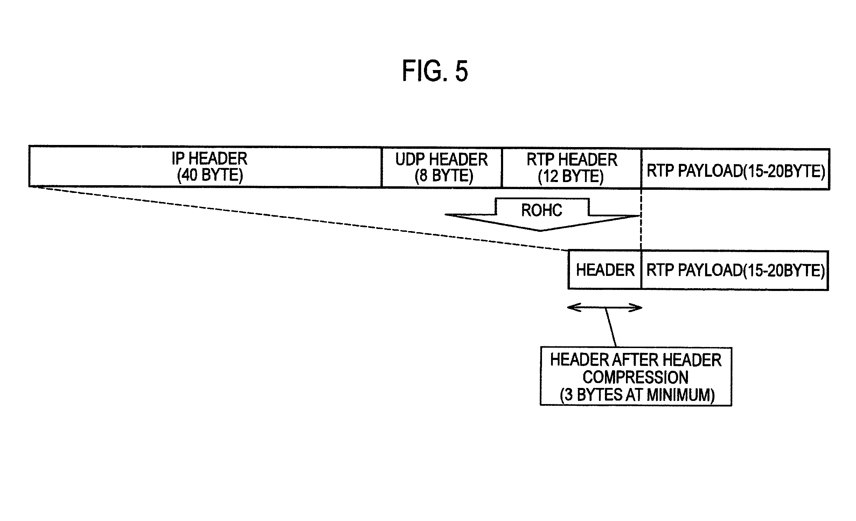

To address this, LTE (Long Term Evolution) is configured to subject such a packet to header compression as shown in Fig. 5, and thus to avoid a waste of radio resources (see Non-patent documents 1 and 2, for example).

This header compression is conducted by ROHC (RObust Header Compression) control in a PDCP (Packet Data Convergence Protocol) layer.

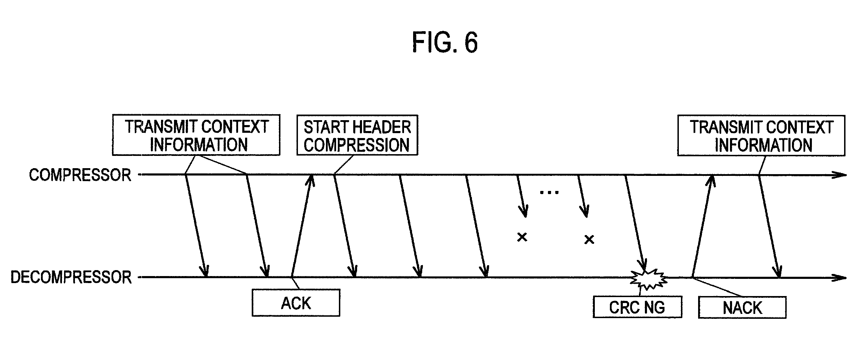

As shown in Fig. 6, in the ROCH control, "Compressor" on a sender side is configured to perform the header compression by using context information shared with "Decompressor" on a receiver side.

On the other hand, the "Decompressor" on the receiver side is configured to decompress the header of the received packet by using the context information shared with the "Compressor" on the sender side.

The "Decompressor" on the receiver side is configured to perform CRC (Cyclic Redundant Check) after decompressing the header of the received packet, and thus to check whether or not the header of the received packet is decompressed successfully.

If the header is not decompressed successfully, for example, a large amount of packets are lost in a radio section and the "Decompressor" on the receiver side and the "Compressor" on the sender side cause a mismatch of the context information, the "Decompressor" on the receiver side notifies the "Compressor" on the sender side of the mismatch of the context information by transmitting a feedback packet thereto.

Here, when the "Compressor" on the sender side receives the feedback packet, the "Compressor" sends the "Decompressor" on the receiver side information for matching the context information to be used.

Here, the "Decompressor" on the receiver side may transmit the above-mentioned feedback packet alone, or send the feedback packet while adding the feedback packet to a data packet (in other words, the feedback packet may be "piggy-backed" on the data packet).

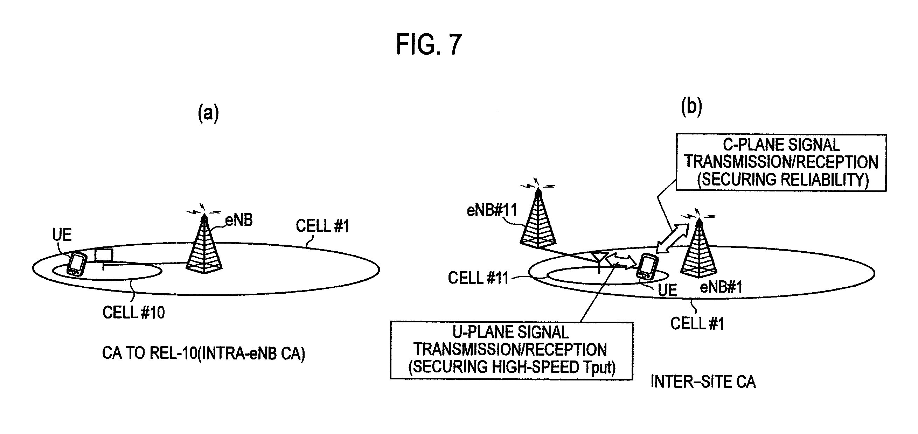

Meanwhile, in LTE Release-10, CA (Carrier Aggregation) to perform communication by aggregating multiple CCs (Component Carriers) under the same radio base station eNB, namely, "Intra-eNB CA" has been introduced in order to realize broadband communication over 20 MHz (for example, communication at 100 Hz) (see Fig. 7(a)).

Thereafter, in LTE Release-12 and beyond, "Small Cell enhancement" has been proposed and introduction of "Inter-eNB CA" to perform communication by aggregating CCs (cells) under different radio base stations eNB is under study as one type of architecture more flexible than the conventional one.

For example, one possible operation by using the "Inter-eNB CA" is to perform communication of a C-plane signal that requires reliability with a cell #1 (macrocell) under a radio base station eNB #1 through an SRB (Signaling Radio Bearer), while to perform communication of a U-plane signal that requires broadband communication with a cell #11 (small cell) under a radio base station eNB #11 through a DRB (Data Radio Bearer) (see Fig. 7(b)).

In addition, a configuration in which a downlink packet and an uplink packet for a certain mobile station are transmitted and received from and to different radio base stations eNB is under study as an operation form of the "Inter-eNB CA."

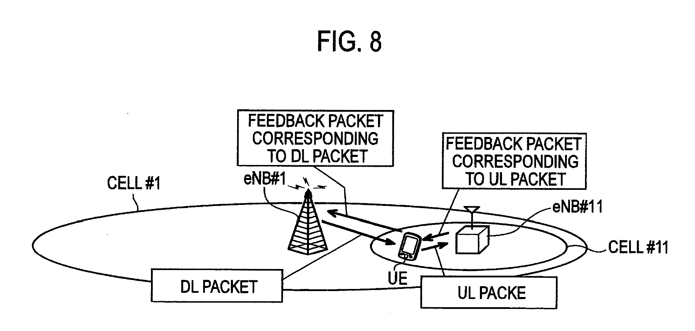

Specifically, the configuration under study is that the radio base station eNB #1 managing the cell #1 (macrocell) transmits the downlink packet to a mobile station UE and the mobile station UE transmits the uplink packet to the radio base station eNB #11 managing the cell #11 (small cell), as shown in Fig. 8.

In the meantime, since a scheduler is mounted on each radio base station eNB, a feedback packet (MAC/RLC-ACK/NACK) corresponding to the uplink packet has to be transmitted from the radio base station eNB #11 to the mobile station UE and a feedback packet (MAC/RLC-ACK/NACK) corresponding to the downlink packet has to be transmitted from the mobile station UE to the radio base station eNB #1 as shown in Fig. 8.

### PRIOR ART DOCUMENTS

### NON-PATENT DOCUMENTS

Non-patent document 1: 3GPP TS36.323
Non-patent document 2: RFC3095
Non-patent document 3: 3GPP TS36.300

### SUMMARY OF THE INVENTION

However, when the operation form as shown in Fig. 8 is adopted, the mobile station UE has to determine whether a packet to be transmitted is a data packet (Data-PDU: Protocol Data Unit) or a feedback packet (Control-PDU), and to identify the radio base station eNB of a destination of the packet.

In this regard, the mobile station UE can distinguish between a data packet and a control packet (feedback packet) based on a prescribed bit field in the packet (PDU).

However, whether or not to "piggy-back" the feedback packet on the data packet in the ROHC control is an implementation matter of the mobile station UE.

In this respect, there is a problem that if the feedback packet is "piggy-backed" on the data packet, the mobile station UE may not be able to transmit the feedback packet to the appropriate radio base station eNB.

This causes a problem that a mismatch of the context information occurs between the "Compressor" of the radio base station eNB and the "Decompressor" of the mobile station UE.

The present invention has been made in view of the aforementioned problems. An object of the present invention is to provide a network device and a mobile station, which are capable of transmitting a feedback packet to an appropriate radio base station in ROHC control.

A first feature of the present invention is summarized as a network device including: a transmission unit configured to transmit instruction information to a mobile station, the instruction information prohibiting sending of a feedback packet while adding the feedback packet to a data packet in ROHC control.

A second feature of the present invention is summarized as a mobile station including: a generation unit configured to generate a feedback packet in ROHC control. Here, the generation unit is configured to determine whether or not to send a feedback packet while adding the feedback packet to a data packet, based on instruction information received from a network device.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a functional block diagram of a mobile station according to the first embodiment of the present invention.
[Fig. 4] Fig. 4 is a flowchart showing an operation of the mobile station according to the first embodiment of the present invention.
[Fig. 5] Fig. 5 is a diagram for explaining a related art.
[Fig. 6] Fig. 6 is a diagram for explaining the related art.
[Fig. 7] Fig. 7 is a diagram for explaining the related art.
[Fig. 8] Fig. 8 is a diagram for explaining the related art.

### MODE FOR CARRYING OUT THE INVENTION

### (Mobile Communication System According to First Embodiment of Present Invention)

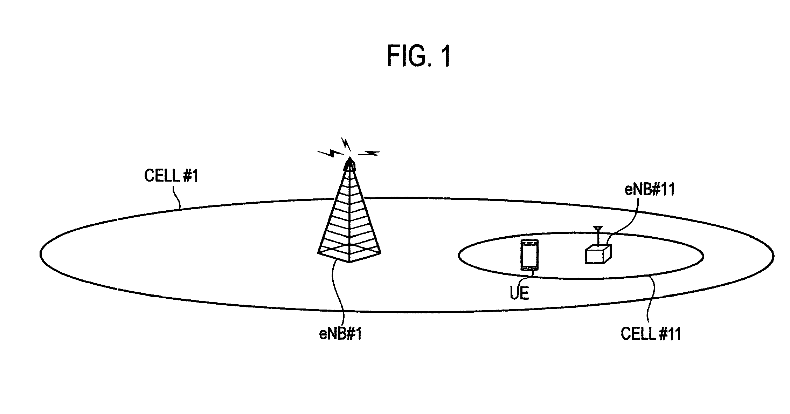

A mobile communication system according to a first embodiment of the present invention will be described with reference to Fig. 1 to Fig. 4.

As shown in Fig. 1, the mobile communication system according to the present embodiment includes a radio base station eNB #1 which manages a cell #1, and a radio base station eNB #11 which manages a cell #11.

Here, the cell #11 is a small cell (phantom cell) and the cell #1 is a macrocell. Note that a coverage area of the cell #11 and a coverage area of the cell #1 are deployed such that the coverage areas at least partially overlap each other.

The radio base station eNB #1 may also be referred to as a macro radio base station (Macro-eNB), while the radio base station eNB #11 may also be referred to as a small radio base station (Small-eNB) or a phantom radio base station (Phantom-eNB).

Meanwhile, the mobile communication system according to the present embodiment is an LTE-based mobile communication system. In the mobile communication system according to the present embodiment, a mobile station UE is configured to be capable of performing the "Inter-eNB CA."

Here, in the mobile communication system according to the present embodiment, the mobile station UE is assumed to perform the "Inter-eNB CA" through the cell #1 under the radio base station eNB #1 and the cell #11 under the radio base station eNB #11.

Specifically, in the mobile communication system according to the present embodiment, the radio base station eNB #1 is configured to transmit a downlink packet to the mobile station UE and the mobile station UE is configured to transmit an uplink packet to the radio base station eNB #11.

Meanwhile, the mobile communication system according to the present embodiment is configured such that a feedback packet (MAC/RLC-ACK/NACK) corresponding to the uplink packet is transmitted from the radio base station eNB #11 to the mobile station UE and a feedback packet (MAC/RLC-ACK/NACK) corresponding to the downlink packet is transmitted from the mobile station UE to the radio base station eNB #1.

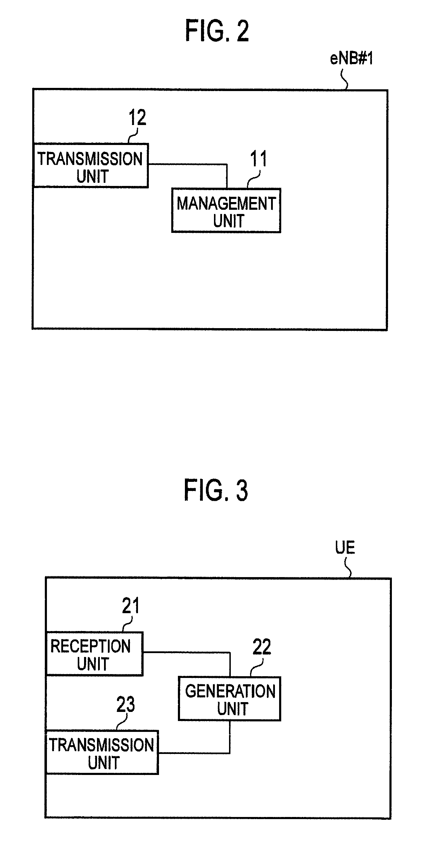

As shown in Fig. 2, the radio base station eNB #1 according to the present embodiment includes a management unit 11 and a transmission unit 12.

The management unit 11 is configured to manage context information used in ROHC control to be performed between the radio base station eNB #1 and the mobile station UE.

Moreover, the management unit 11 is configured to manage information concerning the "Inter-eNB CA," information concerning a bearer which is set between the radio base station eNB #1 and the mobile station UE, and the like.

The transmission unit 12 is configured to transmit various signals to the mobile station UE. For example, the transmission unit 12 is configured to send the mobile station UE instruction information which prohibits "piggybacking" in the ROHC control.

Here, the instruction information may be designed to designate a radio base station eNB or a cell to which a feedback packet is to be transmitted.

Meanwhile, the transmission unit 12 may be configured to transmit the above-mentioned instruction information only when a radio base station eNB which is a destination of the uplink packet transmitted from the mobile station UE is different from a radio base station eNB which is a sender of the downlink packet received by the mobile station UE.

Alternatively, the transmission unit 12 may be configured to transmit the above-mentioned instruction information only when a voice bearer for the mobile station UE is set.

Here, the transmission unit 12 may be configured to transmit the instruction information through a signal on an arbitrary layer such as an RRC layer, a PDCPP layer, an RLC layer, an MAC layer, or a physical layer.

Here, the functions shown in Fig. 2 may be provided to another network device such as the radio base station eNB #11 or a mobile management node MME, instead of the radio base station eNB #1.

As shown in Fig. 3, the mobile station UE according to the present embodiment includes a reception unit 21, a generation unit 22, and a transmission unit 23.

The reception unit 21 is configured to receive various signals from the radio base station eNB #1, the radio base station eNB #11, and the like.

For example, in the mobile communication system according to the present embodiment, the reception unit 21 is configured to receive the downlink packet from the radio base station eNB #1 and to receive the feedback packet corresponding to the uplink packet from the radio base station eNB #11.

Moreover, the reception unit 21 is configured to receive the above-mentioned instruction information from the radio base station eNB #1. Here, the reception unit 21 may be configured to receive the above-mentioned instruction information from the radio base station eNB #11, the mobile management node MME, or the like instead of the radio base station eNB #1.

The generation unit 22 is configured to generate the uplink packet, the feedback packet corresponding to the downlink packet, and the like to be transmitted therefrom.

Here, the generation unit 22 is configured to determine whether or not the feedback packet should be "piggy-backed" on a data packet, based on the instruction information received from the radio base station eNB #1 or the like.

For example, if the above-mentioned instruction information prohibits the "piggybacking" in the ROHC control, then the generation unit 22 is configured to generate the feedback packet as an independent uplink packet (Control-PDU) without "piggy-backing" the feedback packet on the data packet.

On the other hand, if the above-mentioned instruction information does not prohibit the "piggybacking" in the ROHC control, then the generation unit 22 is configured to "piggy-back" the feedback packet on the data packet.

The transmission unit 23 is configured to transmit various signals to the radio base station eNB #1, the radio base station eNB #11, and the like.

For example, in the mobile communication system according to the present embodiment, the transmission unit 22 is configured to send the radio base station eNB #11 the uplink packet and to send the radio base station eNB #1 the feedback packet corresponding to the downlink packet.

Here, the transmission unit 23 is configured to determine whether a packet to be transmitted is the data packet (Data-PDU) or the contol packet (Control-PDU) based on a prescribed bit field in the packet, and thus to identify the radio base station eNB of a destination of the packet.

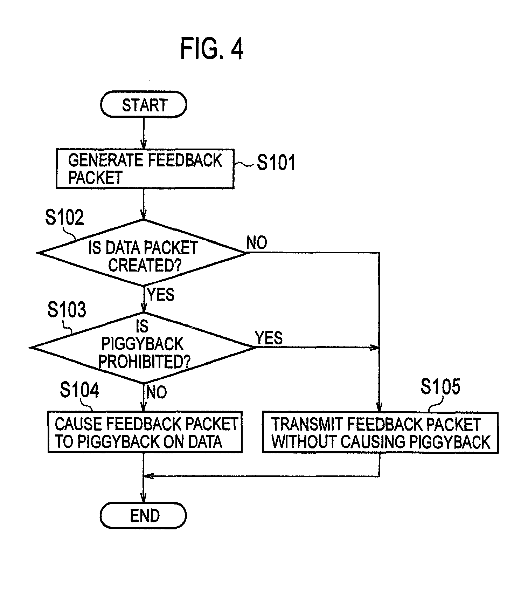

An operation of the mobile communication system according to the present embodiment, or more specifically, an operation of the mobile station UE according to the present embodiment will be described below with reference to Fig. 4.

As shown in Fig. 4, in step S1001, the mobile station UE generates the feedback packet corresponding to the downlink packet. Then, in step S1002, the mobile station UE determines whether or not the data packet to be transmitted is created.

In the case of "Yes, " the operation proceeds to step S103. In the case of "No," the operation proceeds to step S105.

In step S103, based on the instruction information received from the network device, the mobile station UE determines whether or not the "piggybacking" is prohibited in the ROHC control.

In the case of "No," the operation proceeds to step S104. In the case of "Yes," the operation proceeds to step S105.

In step S104, the mobile station UE "piggy-backs" the feedback packet on the data packet, and transmits the packets to the radio base station eNB #11.

In step S105, the mobile station UE transmits the feedback packet independently to the radio base station eNB #1 without "piggybacking" the feedback packet on the data packet.

The features of the present embodiment may also be expressed as follows.

A first feature of the present embodiment is summarized as a radio base station eNB#1 (network device) including:
a transmission unit 12 configured to transmit instruction information to a mobile station UE, the instruction information prohibiting "piggybacking (sending of a feedback packet while adding the feedback packet to a data packet) " in ROHC control.

According to the above-described feature, by prohibiting the "piggybacking" in the ROHC control, it is possible to avoid a situation where it is likely that the mobile station UE cannot transmit the feedback packet to an appropriate radio base station eNB due to "piggybacking" of the feedback packet on the data packet.

In the first feature of the present embodiment, the instruction information may be designed to designate any one of a radio base station eNB and a cell to which the feedback packet is to be transmitted.

According to the above-described feature, it is possible to give a clear instruction to the mobile station UE regarding the radio base station eNB as the destination (a destination cell) of the above-mentioned feedback packet.

In the first feature of the present embodiment, the transmission unit 12 is configured to transmit the instruction information only when a radio base station eNB being a destination of an uplink packet transmitted from the mobile station UE is different from a radio base station eNB being a sender of a downlink packet received by the mobile station UE.

According to the above-described feature, it is possible to assign a maximum value to an advantage of the effective use of radio resources by the "piggybacking" by prohibiting the "piggybacking" in the ROHC control only when it is likely that the feedback packet cannot be transmitted to the appropriate radio base station eNB.

In the first feature of the present embodiment, the transmission unit 12 is configured to transmit the instruction information only when a voice bearer for the mobile station UE is set.

According to the above-described feature, it is possible to assign the maximum value to the advantage of the effective use of radio resources by the "piggyback" by prohibiting the "piggyback" in the ROHC control only when it is likely that the feedback packet cannot be transmitted to the appropriate radio base station eNB.

A second feature of the present embodiment is summarized as a mobile station UE including:
a generation unit 22 configured to generate a feedback packet in ROHC control. Here, the generation unit 22 is configured to determine whether or not to send the feedback packet while adding the feedback packet to a data packet, based on instruction information received from a radio base station eNB#1 (network device).

According to the above-described features, since the mobile station UE does not "piggy-back" the feedback packet on the data packet in response to the instruction from the network device, it is possible to avoid a situation where it is likely that the mobile station UE cannot transmit the feedback packet to an appropriate radio base station eNB due to "piggybacking" of the feedback packet on the data packet.

In the second feature of the present embodiment, the instruction information is designed to designate any one of a radio base station eNB and a cell to which the feedback packet is to be transmitted.

According to the above-described feature, the mobile station UE can clearly grasp the radio base station eNB which is the destination (the destination cell) of the above-mentioned feedback packet based on the instruction information.

It should be noted that the foregoing operations of the mobile station UE and the radio base stations eNB#1/eNB#11 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base stations eNB#1/eNB#11. Otherwise, the storage medium and the processor may be provided as discrete components inside the mobile station UE and the radio base stations eNB#1/eNB#11.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-053423 (filed on March 15, 2013) is incorporated by reference in the present specification.

### INDUSTRIAL APPLICABILITY

As described above, according to the present invention, it is possible to provide a network device and a mobile station, which are capable of transmitting a feedback packet to an appropriate radio base station in ROHC control.

### EXPLANATION OF THE REFERENCE NUMERALS

- eNB #1, eNB #11: radio base station
- UE: mobile station
- 11: management unit
- 12, 23: transmission unit
- 21: reception unit
- 22: generation unit

## Claims

1. A network device comprising:
a transmission unit configured to transmit instruction information to a mobile station, the instruction information prohibiting sending of a feedback packet while adding the feedback packet to a data packet in ROHC control.

2. The network device according to claim 1, wherein the instruction information is designed to designate any one of a radio base station and a cell to which the feedback packet is to be transmitted.

3. The network device according to claim 1 or 2, wherein the transmission unit is configured to transmit the instruction information only when a radio base station being a destination of an uplink packet transmitted from the mobile station is different from a radio base station being a sender of a downlink packet received by the mobile station.

4. The network device according to claim 1 or 2, wherein the transmission unit is configured to transmit the instruction information only when a voice bearer for the mobile station is set.

5. A mobile station comprising:
a generation unit configured to generate a feedback packet in ROHC control, wherein
the generation unit is configured to determine whether or not to send a feedback packet while adding the feedback packet to a data packet, based on instruction information received from a network device.

6. The mobile station according to claim 5, wherein the instruction information is designed to designate any one of a radio base station and a cell to which the feedback packet is to be transmitted.
